## Europäisches Patentamt

## European Patent Office

## Office européen des brevets

(19)

(11) Veröffentlichungsnummer: **0 183 812**
**B1**

(12)

# EUROPÄISCHE PATENTSCHRIFT

(45) Veröffentlichungstag der Patentschrift:
03.02.88

(51) Int. Cl.⁴: **B 23 K 37/00**

(21) Anmeldenummer: **85902987.8**

(22) Anmeldetag: **11.06.85**

(86) Internationale Anmeldenummer:
**PCT/EP 85/00277**

(87) Internationale Veröffentlichungsnummer:
**WO 86/00036 (03.01.86 Gazette 86/01)**

(54) **GERÄT ZUM REINIGEN DER GASDÜSE EINES SCHWEISSBRENNERS.**

(30) Priorität: **13.06.84 DE 3421885**

(43) Veröffentlichungstag der Anmeldung:
**11.06.86 Patentblatt 86/24**

(45) Bekanntmachung des Hinweises auf die Patenterteilung:
**03.02.88 Patentblatt 88/5**

(84) Benannte Vertragsstaaten:
**AT DE FR GB IT SE**

(56) Entgegenhaltungen:
**US-A-3 000 026**

(73) Patentinhaber: **THIELMANN, Joachim, Obergasse 15, D-6342 Haiger 9/OT Rodenbach (DE)**
Patentinhaber: **THIELMANN, Friedolin, Fliederstrasse 9, D-6342 Haiger 9/OT Rodenbach (DE)**

(72) Erfinder: **THIELMANN, Friedolin, Fliederstrasse 9, D-6342 Haiger 9/OT Rodenbach (DE)**

(74) Vertreter: **Knefel, Siegfried, Dipl.- Math., Wertherstrasse 16 Postfach 1924, D-6330 Wetzlar (DE)**

EP 0 183 812 B1

## Beschreibung

Die Erfindung betrifft ein Gerät zum Reinigen der Gasdüse eines Schweißbrenners nach dem Oberbegriff des Anspruches 1. Bei derartigen Geräten wird der Schweißdraht durch die Düse geführt und mit der Düse der Schweißstelle genähert. Beim Schweißen verspritzt das Schweißmaterial in hohem Maße. Es setzen sich deshalb in der Düse Verunreinigungen fest, welche die Düse nach und nach verschließen. Deshalb muß die Düse des öfteren gereinigt werden. Nach dem Stand der Technik sind hierfür Reinigungsgeräte bekannt, in welche beispielsweise ein elektronisch gesteuerter Roboter die Düse einführt. Umlaufende Messer kratzen die Düse frei. Anschließend wird die Düse vom Roboter in eine zweite Position bewegt, in der sie mit einem Antihaftmittel besprüht wird. Da die Düse an der ersten Reinigungsstelle sehr genau zentriert sein muß und nach der Zentrierung die umlaufenden Messer der Düse zu nähern sind, nach der Reinigung jedoch wieder abgesenkt werden müssen, damit die Düse in die Sprühposition gefahren werden kann, sind die bekannten Geräte aufwendig. Schließlich geht aber auch durch den Wechsel der einzelnen Bearbeitungspositionen Zeit verloren.

Aufgabe der Erfindung ist es, ein Reinigungsgerät anzugeben, das einfach in seinem Aufbau ist und mit dem Düsen schneller gereinigt werden können als bisher.

Diese Aufgabe wird durch die Merkmale des Anspruches 1 gelöst.

Dadurch, daß jetzt die zu reinigende Düse während des gesamten Reinigungsvorganges einschließlich des Besprühens mit einem Antihaftmittel in ein und derselben Position verbleibt, geht keine Zeit durch ein Hin- und Herfahren der Düse im Gerät verloren. Vielmehr kann unmittelbar hinter der Ein- und Ausführöffnung des Gerätes die Bearbeitungsposition vorgesehen werden.

Weitere Einzelheiten der Erfindung können den Unteransprüchen sowie der Beschreibung von Ausführungsbeispielen entnommen werden.

Auf der Zeichnung sind Ausführungsbeispiele der Erfindung dargestellt, und zwar zeigen:

Fig. 1 die Ansicht des Gerätes in perspektivischer Darstellung;

Fig. 2 einen Längsschnitt durch das Gerät;

Fig. 3 einen Schnitt nach der Linie III-III der Fig. 2;

Fig. 4 ein geändertes Ausführungsbeispiel;

Fig. 5 eine schematische Darstellung der Wirkungsweise des Ausführungsbeispieles nach Fig. 4.

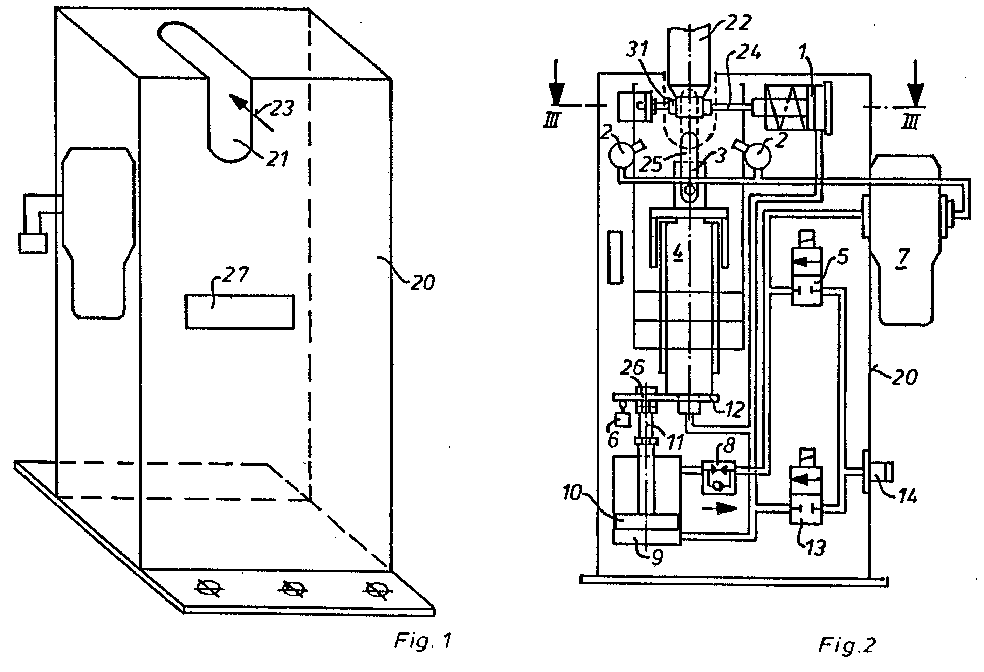

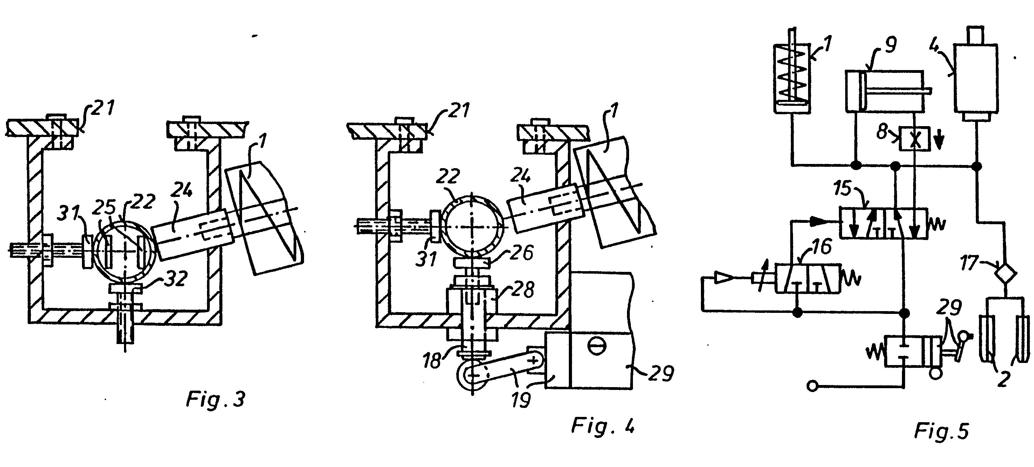

Das Gerät 20 weist eine Einführöffnung 21 für die zu reinigende Düse 22 auf. Die Düse wird in Richtung des Pfeiles 23, beispielsweise mit Hilfe des Greifarmes eines Roboters eingeführt. Die Düse 22 trifft gemäß Fig. 2 und 3 auf zwei Anschläge 31 und 32, welche sie in der Reinigungsposition zentrieren. Die Anschläge 31 und 32 bestehen aus verstellbaren Schrauben mit Kontermuttern, um Düsen mit unterschiedlichen Durchmessern in der Bearbeitungsposition zentrieren zu können. Ein pneumatisch betätigter Kolben 24 drückt die Düse 22 gegen die Anschläge 31, 32, so daß die Düse während der Bearbeitung unverrückbar fest im Gerät angeordnet ist.

Unterhalb der Bearbeitungsposition ist ein pneumatisch angetriebener Motor 4 vorgesehen, welcher einen Messerkopf 3 antreibt. Die Messer 25 kratzen die Düse 22 sauber. Motor 4 und Messerkopf 3 sind mit Hilfe eines in einem Zylinder 9 pneumatisch bewegten Kolbens über die Kolbenstange 11 und eine den Motor 4 tragende Platte 12 höhenverstellbar gelagert. Im abgesenkten Zustand der Messer 25 kann die Düse 22 zunächst von vorn her in das Gerät eingeführt werden. Anschließend wird der Motor 4 mit dem Messerkopf 3 angehoben, bis die Messer 25 die Düse erreichen.

Nachdem die Düse von den Verunreinigungen freigekratzt ist, wird der Motor 4 mit dem Messerkopf 3 wieder abgesenkt, und Sprühdüsen 2 bespritzen die Düse 22 mit der Antihaftflüssigkeit. Die Antihaftflüssigkeit befindet sich in einem mit Druckluft beaufschlagbaren Behälter 7.

Zur Steuerung des Arbeitsablaufes sind Magnetventile 13 und 5 vorgesehen. Wird das Ventil 13 vom Roboterprogramm her geschlossen, wird der Kolben 24 mit Druckluft beaufschlagt und die Düse 22 zentriert, gleichzeitig tritt Druckluft unterhalb des Kolbens 10 in den Zylinder 9 ein und hebt den Kolben 10 und damit den Motor 4 an. Der Reinigungsvorgang kann jetzt anlaufen. Nach Beendigung des Reinigungsvorganges wird der Motor wieder abgesenkt. Sobald die Platte 12 auf einen Endschalter 6 trifft, ist der Absenkvorgang beendet. Das Magnetventil 5 kann jetzt vom Roboterprogramm her geschlossen werden. Dieses Ventil läßt Druckluft in den Behälter 7 eintreten, so daß aus den Düsen 2 die Antihaftflüssigkeit auf die Düse 22 gesprüht wird. Über das Verzögerungsglied 8 wird der Kolben 24 von der Düse gelöst, so daß diese nunmehr ausfahren kann.

Gemäß den Fig. 4 und 5 werden die Magnetventile 5 und 13 nicht vom Roboterprogramm her gesteuert sondern von der eingeführten Düse selbst. Eine der Zentrierschrauben 31, 32, im vorliegenden Fall die Zentrierschraube 32, ist durch eine Zentrierschraube 18 ersetzt, welche axial verschiebbar in einer Fassung 28 gelagert ist. Wird die Düse eingeführt, trifft sie auf die Schraube 18, welche sich so weit verlagert, bis ihr Kopf 26 an der Fassung 28 anliegt. Das untere Ende der Schraube betätigt einen Hebel 19, der seinerseits auf einen Mikroschalter 29 wirkt und den Steuerablauf auslöst. Der Mikroschalter 29 wirkt auf ein Zeitventil 16, das seinerseits auf ein Mehrwegeventil 15 wirkt. Die Ventile bewirken folgende Steuerfunktionen: Die Zentrierdüse wird mittels des Kolbens 24 festgestellt, der Motor 4 wird angehoben und die Messer kratzen die Düse frei, anschließend wird der Motor abgesenkt, der Öffner 17 betätigt die Sprühdüsen 2, so daß die Schweißdüse mit dem Antihaftspray besprüht wird, und schließlich fährt der Kolben 24 zurück. Die Düse kann jetzt ausgefahren und neu verwendet werden.

**Patentansprüche**

1. Gerät zum Reinigen der Gasdüse (22) eines Schweißbrenners, bei dem durch umlaufende Messer (25) Verunreinigungen, welche sich auf der Düse (22) abgesetzt haben, abgekratzt werden, und bei dem anschließend die Düse (22) mit einem Antihaftmittel besprüht wird, dadurch gekennzeichnet, daß das Gerät (20) eine Düsenaufnahme (24, 31, 32) aufweist, bestehend aus zwei Anschlägen (31, 32) und einem Kolben (24), der die Düse (22) gegen die Anschläge (31, 32) drückt, und eine seitlich angeordnete Ein- und Ausführöffnung (21), daß unterhalb der Aufnahme axial verstellbare Messer (25) vorgesehen sind sowie schräg angestellte Sprühdüsen (2) für das Antihaftmittel.

2. Gerät nach Anspruch 1, dadurch gekennzeichnet, daß der Messerkopf (3) mit einem Motor (4) in Drehverbindung steht und Messerkopf und Motor zusammen axial verstellbar sind.

3. Gerät nach Anspruch 2, gekennzeichnet durch pneumatisch oder hydraulisch bewegbare Verstellmittel (9, 10, 12).

4. Gerät nach Anspruch 2, gekennzeichnet durch einen pneumatisch angetriebenen Motor (4).

5. Gerät nach Anspruch 1, gekennzeichnet durch einen pneumatisch oder hydraulisch betätigten Zentrierkolben (24).

6. Gerät nach Anspruch 1, dadurch gekennzeichnet, daß einer der Anschläge (31, 32) als Endschalter ausgebildet ist.

7. Gerät nach Anspruch 6, dadurch gekennzeichnet, daß der Endschalter die Verstellbewegung des Antriebsmotors (4) auslöst.

8. Gerät nach Anspruch 3, dadurch gekennzeichnet, daß in der Bahn des Motors ein Endschalter (6) vorgesehen ist.

9. Gerät nach Anspruch 1, dadurch gekennzeichnet, daß die Anschläge (31, 32) verstellbar ausgebildet sind.

10. Verfahren zum Reinigen der Gasdüse eines Schweißbrenners vermittels des Gerätes nach Anspruch 1 dadurch gekennzeichnet, daß die Düse in das Reinigungsgerät eingefahren und dort vermittels eines Kolbens (24) und eines Anschlages (37) zentriert und verriegelt wird, daß in dieser Position ein Motor mit rotierenden Messern angehoben wird, derart, daß die Messer die Düse freikratzen, daß der Motor und die Messer anschließend wieder abgesenkt werden und nach dem Abkratzen die Düse mit einem Antihaftmittel besprüht wird, daß anschließend durch den Kolben (24) die Verriegelung in dem Reinigungsgerät gelöst wird und die Düse zur weiteren Verwendung aus dem Gerät herausgefahren wird.

**Claims**

1. An apparatus for cleaning the gas nozzle (22) of a welding torch, wherein by rotating blades (25) impurities, which have deposited on the nozzle (22), are scraped off, and wherein subsequently the nozzle (22) is sprayed with an antisticking agent, characterized in that the apparatus (20) comprises a nozzle receiver (24, 31, 32), consisting of two stops (31, 32) and a piston (24), which urges the nozzle (22) against the stops (31, 32), and a laterally positioned inlet and outlet opening (21), that beneath the receiver axially adjustable blades (25) are provided as well as transversely positioned spraying nozzles (2) for the antisticking agent.

2. Apparatus according to claim 1, characterized in that the blade head (3) is in rotary connection with a motor (4) and blade head and motor are axially adjustable.

3. Apparatus according to claim 2, characterized by pneumatically or hydraulically movable adjusting means (9, 10, 12).

4. Apparatus according to claim 2, characterized by a pneumatically driven motor (4).

5. Apparatus according to claim 1, characterized by a pneumatically or hydraulically operated centring piston (24).

6. Apparatus according to claim 1, characterized in that one of the stops (31, 32) is provided as a limit switch.

7. Apparatus according to claim 6, characterized in that the limit switch effects the adjusting motion of the driving motor (4).

8. Apparatus according to claim 3, characterized in that in the path of the motor a limit switch (6) is provided.

9. Apparatus according to claim 1, characterized in that the stops (31, 32) are adjustable.

10. A process for cleaning the gas nozzle of a welding torch by means of the apparatus according to claim 1, characterized in that the nozzle is moved into the cleaning apparatus and is centred and locked there by means of a piston (24) and a stop (31), that in this position a motor with rotating blades is lifted, in such a manner that the blades scrape the nozzle free, that the motor and the blades subsequently are lowered again and that after the scraping off the nozzle is sprayed with an antisticking agent, that subsequently the lock in the cleaning apparatus is released by the piston (24) and the nozzle is moved out of the apparatus for further use.

## Revendications

1. Appareil de nettoyage de la buse de gaz (22) d'une torche de soudage, où des impuretés qui se sont déposées sur la buse (22) sont enlevées par grattage au moyen de lames tournantes (25) et où ensuite la buse (22) reçoit par pulvérisation un agent anti-adhérence, caractérisé en ce que l'appareil (20) comporte un réceptable de buse (24, 31, 32), se composant de deux butées (31, 32) et d'un piston (24), qui pousse la buse (22) contre les butées (31, 32), ainsi qu'une ouverture d'entrée et de sortie (21) disposée latéralement, en ce qu'il est prévu en dessous du réceptacle des lames (25) déplaçables axialement ainsi que des buses (2) de pulvérisation de l'agent anti-adhérence qui sont disposées en oblique.

2. Appareil selon la revendication 1, caractérisé en ce que la tête à lames (3) est reliée de façon tournante avec un moteur (4) et en ce que la tâte à lames et le moteur sont déplaçables ensemble axialement.

3. Appareil selon la revendication 2, caractérisé par des moyens de manoeuvre (9, 10, 12) pouvant être actionnés pneumatiquement ou hydrauliquement.

4. Appareil selon la revendication 2, caractérisé par un moteur (4) entraîné pneumatiquement.

5. Appareil selon la revendication 1, caractérisé par un piston de centrage (24) actionné pneumatiquement ou hydrauliquement.

6. Appareil selon la revendication 1, caractérisé en ce qu'une des butées (31, 32) est agencée comme un contacteur d'extrémité.

7. Appareil selon la revendication 6, caractérisé en ce que le contacteur d'extrémité déclenche le mouvement de manoeuvre du moteur d'entraînement (4).

8. Appareil selon la revendication 3, caractérisé en ce qu'il est prévu un contacteur d'extrémité (6) dans la trajectoire du moteur.

9. Appareil selon la revendication 1, caractérisé en ce que les butées (31, 32) sont agencées de façon à être manoeuvrables.

10. Procédé de nettoyage de la buse de gaz d'une torche de soudage au moyen d'un appareil conforme à la revendication 1, caractérisé en ce que la buse est introduite dans l'appareil de nettoyage où elle est centrée et verrouillée au moyen d'un piston (24) et d'une butée (31), en ce que dans cette position, un moteur comportant des lames tournantes est déplacé vers le haut de telle sorte que les lames nettoient la buse par grattage, en ce que le moteur et les lames sont ensuite à nouveau descendus et, après le nettoyage par grattage, la buse est soumise à une pulvérisation d'un agent anti-adhérence, en ce qu'ensuite, au moyen du piston (24), le verrouillage dans l'appareil de nettoyage est supprimé et la buse est sortie de l'appareil en vue de son utilisation ultérieure.

Fig.2

Fig. 1

1

Fig. 3

Fig. 4

Fig. 5

0 183 812